(19)

Europäisches Patentamt

European Patent Office

Office européen des brevets

(11)  **EP 4 123 582 A1**

(12)  **EUROPEAN PATENT APPLICATION**

(43) Date of publication:
**25.01.2023 Bulletin 2023/04**

(21) Application number: **22186263.4**

(22) Date of filing: **21.07.2022**

(51) International Patent Classification (IPC):
**G06T 7/20** $^{(2017.01)}$

(52) Cooperative Patent Classification (CPC):
**G06T 7/20;** G06T 2207/20081

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.07.2021 US 202117384637**

(71) Applicant: **WAYMO LLC**
**Mountain View, CA 94043 (US)**

(72) Inventors:
• **MAURER, Daniel Rudolf**
**Mountain View, 94041 (US)**
• **AYVACI, ALPER**
**Mountain View, 94041 (US)**
• **ANDERSON, ROBERT WILLIAM**
**Mountain View, 94041 (US)**
• **JONSCHKOWSKI, RICO**
**Mountain View, 94041 (US)**
• **STONE, AUSTIN CHARLES**
**Mountain View, 94041 (US)**
• **ANGELOVA, ANELIA**
**Mountain View, 94041 (US)**
• **ABDO, NICHOLA**
**Mountain View, 94041 (US)**
• **SWEENEY, Christopher John**
**Mountain View, 94041 (US)**

(74) Representative: **Anderson, Oliver Ben**
**Venner Shipley LLP**
**200 Aldersgate**
**London EC1A 4HD (GB)**

(54)  **GENERATING OPTICAL FLOW LABELS FROM POINT CLOUDS**

(57) Methods, systems, and apparatus, including computer programs encoded on a computer storage medium, for generating an optical flow label from a lidar point cloud. One of the methods includes obtaining data specifying a training example, including a first image of a scene in an environment captured at a first time point and a second image of the scene in the environment captured at a second time point. For each of a plurality of lidar points, a respective second corresponding pixel in the second image is obtained and a respective velocity estimate for the lidar point at the second time point is obtained. A respective first corresponding pixel in the first image is determined using the velocity estimate for the lidar point. A proxy optical flow ground truth for the training example is generated based on an estimate of optical flow of the pixel between the first and second images.

FIG. 2

EP 4 123 582 A1

**Description**

BACKGROUND

This specification relates to generating optical flow labels.

Predicting optical flow, i.e., estimating the motion of pixels between one image and another, can assist in motion planning, e.g., by an autonomous vehicle.

Autonomous vehicles include self-driving cars, boats, and aircraft. Autonomous vehicles use a variety of on-board sensors and computer systems to detect nearby objects and use such detections to make control and navigation decisions.

Some autonomous vehicles have on-board computer systems that implement neural networks, other types of machine learning models, or both for various prediction tasks, e.g., object classification within images. For example, a neural network can be used to determine that an image captured by an on-board camera is likely to be an image of a nearby car. Neural networks, or for brevity, networks, are machine learning models that employ multiple layers of operations to predict one or more outputs from one or more inputs. Neural networks typically include one or more hidden layers situated between an input layer and an output layer. The output of each layer is used as input to another layer in the network, e.g., the next hidden layer or the output layer.

SUMMARY

This specification describes a system implemented as computer programs on one or more computers in one or more locations that generates proxy optical flow ground truth labels from velocity estimates for lidar points. Once generated, the proxy optical flow ground truth labels can be used to train a machine learning model that generates an optical flow prediction between two images.

Once trained, the machine learning model can be, for example, deployed on an autonomous vehicle so that optical flow prediction can be performed by an on-board computer system of the autonomous vehicle as the autonomous vehicle navigates through the environment. In other words, the vehicle can use the machine learning model to perform optical flow prediction from images captured by one or more camera sensors of the autonomous vehicle. A planning system of the vehicle can use the optical flow predictions to make planning decisions to plan a future trajectory of the vehicle, e.g., by generating or modifying the future trajectory to avoid moving objects in the environment.

Training a machine learning model that predicts optical flow typically requires training data, i.e., training examples with their corresponding optical flow labels. In particular, training a deep neural network model, which is one type of machine learning model, generally requires a large amount of labeled training data. However, generating optical flow labels is very difficult because optical flow labels are required to specify per-pixel correspondences between pixels in images and sensors that are capable of directly capturing optical flow ground truth in complex environments are not available.

In general, one innovative aspect of the subject matter described in this specification can be embodied in methods that include the actions of obtaining data specifying a training example, the training example including (i) a first image of a scene in an environment captured at a first time point and (ii) a second image of the scene in the environment captured at a second, different time point; obtaining, for each of a plurality of lidar points, (i) a respective second corresponding pixel in the second image and (ii) a respective velocity estimate for the lidar point at the second time point; for each of the plurality of the lidar points, determining a respective first corresponding pixel in the first image for the lidar point using the respective velocity estimate for the lidar point; and generating a proxy optical flow ground truth for the training example that includes, for each of a plurality of pixels in the second image, a respective optical flow estimate that is an estimate of optical flow of the pixel between the first and second images, including: for each of the lidar points, determining an optical flow between (i) the respective second corresponding pixel for the lidar point and (ii) the respective first corresponding pixel for the lidar point. Other embodiments of this aspect include corresponding computer systems, apparatus, and computer programs recorded on one or more computer storage devices, each configured to perform the actions of the methods. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The foregoing and other embodiments can each optionally include one or more of the following features, alone or in combination. In particular, one embodiment includes all the following features in combination. Obtaining, for each of the plurality of the lidar points, the respective velocity estimate for the lidar point at the second time point includes obtaining, for each of one or more detected objects, data specifying a respective three dimensional (3D) bounding box; and determining, for each lidar point in the 3D bounding box, the respective velocity estimate for the lidar point. Determining, for each lidar point in the 3D bounding box, the respective velocity estimate for the lidar point includes: obtaining a semantic label for the 3D bounding box; obtaining a semantic label for each lidar point in the 3D bounding box; and for each lidar point in the 3D bounding box, setting the respective velocity estimate for the lidar point equal to a per-point velocity estimate for the lidar point only when the semantic label for the lidar point matches the semantic label for the 3D bounding box. The actions further include obtaining data specifying that one or more of the lidar points correspond to static background; and generating, for each lidar point that corresponds to the static background, a respective optical flow estimate based on that the static background is static. The actions further include training a machine learning model on the training example and the proxy optical flow ground truth, wherein the machine learning model receives as input two images and generates as output an estimate of an optical flow between the two images. Training the machine learning model includes training the machine learning model on an objective function that includes a first term that measures an error between a predicted optical flow generated by the machine learning model and the proxy optical flow ground truth for the training example. Training the machine learning model includes training the machine learning model using a semi-supervised training process, and wherein the objective function further includes a second term that measures an unsupervised loss.

Particular embodiments of the subject matter described in this specification can be implemented so as to realize one or more of the following advantages.

The systems and techniques can generate a proxy optical flow ground truth between images from three-dimensional (3D) velocity estimates for lidar points in lidar point cloud data. This allows a relatively large amount of real-world training data for training an optical flow prediction machine learning model to be generated without requiring manual labelling of images or sensors that are capable of directly measuring optical flow. In some implementations, semantic per-point labels for the lidar points in the 3D bounding box can be used to generate more precise proxy optical flow ground truth labels. For example, the system can determine that lidar points that corresponds to a portion of the road within a 3D bounding box of a car do not have the same semantic label as the car that is moving, and based on that, the system can determine more accurate proxy optical flow ground truth for the pixels that corresponds to the ground around the car.

The systems and techniques can train an optical flow prediction machine learning model using the generated proxy optical flow ground truth labels for the training examples. The system can perform a supervised training process based on the portion of the training examples that have the proxy optical flow ground truth labels. In some implementations, the system can use the proxy optical flow ground truth labels to improve a semi-supervised training method. The system can incorporate an additional unsupervised loss term that does not require actual optical flow ground truth labels. The improved semi-supervised training method can generate more accurate optical flow estimates, e.g., for objects that are far away from the camera sensors, for objects that have non-rigid motion, for a region of the road near an object. For example, the improved semi-supervised training method using proxy optical flow labels can correctly identify a region of the road near a car, e.g., shadows of the car, as non-moving objects, instead of identifying the ground around the car as a portion of the moving car.

In some implementations, the improved semi-supervised training method can improve the optical flow estimates with regard to illumination or appearance changes of an object in the environment. Many objects can have a non-Lambertian reflection, e.g., when the apparent brightness of the object's surface can be non-isotropic with regard to the observer's angle of view. That is, the brightness can be viewpoint dependent. For example, the surface of the car can have specular reflections that are viewpoint dependent. The optical flow prediction machine learning model trained with the semi-supervised training method can generate improved optical flow estimates with regard to the viewpoint because the model is trained using both a supervised loss based on the proxy ground truth and an unsupervised loss.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example system.
FIG. 2 illustrates an example of generating optical flow labels from lidar point cloud data.
FIG. 3 is a flow chart of an example process for generating optical flow labels from lidar point cloud data.

Like reference numbers and designations in the various drawings indicate like elements.

DETAILED DESCRIPTION

This specification describes how a training system can generate training data for training an optical flow prediction machine learning model. In particular, the specification describes generating proxy optical flow ground truth labels between a pair of images from velocity estimates for lidar points in lidar point cloud data.

In general, the optical flow between a first image and a second image captured at a second, different time point is defined as data that includes, for each pixel in the first image, the estimated two-dimensional velocity for the pixel between the first image and the second image captured at the second, different time point. For example, the optical flow includes, for each pixel in the first time, a motion vector from the pixel in the first image of the scene at the first time to a corresponding pixel in the second image of the scene at the second, later time.

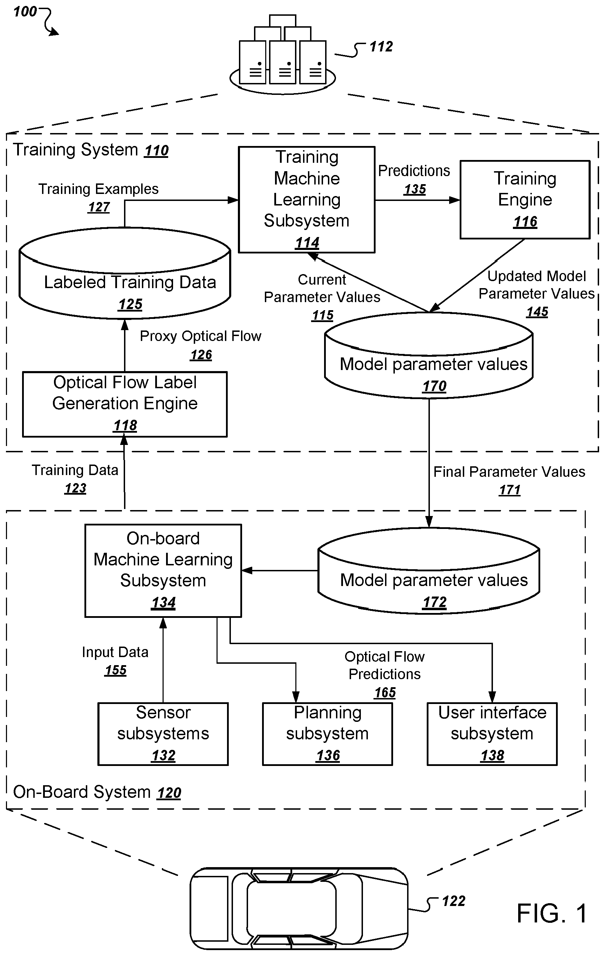

FIG. 1 is a diagram of an example system 100. The system 100 includes a training system 110 and an on-board system 120. While FIG. 1 depicts a machine learning model being deployed on an autonomous vehicle, the described techniques can be used to generate training data for any model that predicts optical flow from any pair of images, e.g., images captured by a camera sensor of a robot, images captured by a camera of a mobile device, and so on.

The on-board system 120 is physically located on-board a vehicle 122. Being on-board the vehicle 122 means that the on-board system 120 includes components that travel along with the vehicle 122, e.g., power supplies, computing hardware, and sensors. The vehicle 122 in FIG. 1 is illustrated as an automobile, but the on-board system 120 can be located on-board any appropriate vehicle type. The vehicle 122 can be a fully autonomous vehicle that uses the optical flow prediction 165 to inform fully-autonomous driving decisions. The vehicle 122 can also be a semi-autonomous vehicle that uses the optical flow prediction 165 to aid a human driver. For example, the vehicle 122 can autonomously apply the brakes if an optical flow prediction indicates that a pedestrian is walking across a roadway. As another example, the vehicle 122 can send a notification signal to a human driver if the optical flow prediction indicates that a car is travelling across the roadway.

The on-board system 120 includes one or more sensor subsystems 132. The sensor subsystems include a combination of components that receive reflections of electromagnetic radiation, e.g., lidar systems that detect reflections of laser light, radar systems that detect reflections of radio waves, and camera systems that detect reflections of visible light, and so on. More specifically, a laser sensor or other sensor can transmit one or more pulses of electromagnetic radiation in a particular direction and can measure the intensity of any reflections as well as the time that the reflection was received. A distance can be computed by determining the time which elapses between transmitting a pulse and receiving its reflection. Each sensor can continually sweep a particular space in angle, azimuth, or both. Sweeping in azimuth, for example, can allow a sensor to detect multiple objects along the same line of sight.

The sensor subsystems 132 provide input data 155 to an on-board machine learning subsystem 134, e.g., a subsystem that implements an optical flow prediction machine learning model. The input data 155 includes two images captured by the camera sensors, one that characterizes a scene in the vicinity of the autonomous vehicle 122 at a first time point and another that characterizes the scene at a second, different time point. For example, the input data 155 can include a first image of a scene that includes pedestrians and vehicles travelling on the roadway at the first time point t-1, and a second image of the scene at the second, later time point t, e.g., 0.05 second after the first time point t-1, or 0.1 second after the first time point t-1.

The on-board machine learning subsystem 134 implements the operations of a machine learning model, e.g., operations of each layer of a neural network, that has been trained to predict the optical flow between the first and the second images in the input data 155. The on-board machine learning subsystem 134 includes one or more computing devices having software or hardware modules that implement the respective operations of a machine learning model, e.g., operations of a neural network according to an architecture of the neural network.

The on-board machine learning subsystem 134 can implement the operations of a machine learning model by loading a collection of model parameter values 172 that are received from the training system 110. Although illustrated as being logically separated, the model parameter values 172 and the software or hardware modules performing the operations may actually be located on the same computing device or, in the case of an executing software module, stored within the same memory device.

The on-board machine learning subsystem 134 can use hardware acceleration or other special-purpose computing devices to implement the operations of a machine learning model. For example, some operations of some layers of a neural network model may be performed by highly parallelized hardware, e.g., by a graphics processing unit or another kind of specialized computing device. In other words, not all operations of each layer need to be performed by central processing units (CPUs) of the on-board machine learning subsystem 134.

The on-board machine learning subsystem 134 generates optical flow predictions 165 based on input data 155, i.e., the first and second images that characterize the scene in the environment at the first time point and the second, different time point. Each optical flow prediction 165 can include, for each pixel in the first image, a predicted motion vector that characterized the motion of the pixel from the first image captured at the first time point to a corresponding pixel in the second image captured at the second time point. The predicted motion vector can be ($\frac{\Delta x}{\Delta t}, \frac{\Delta y}{\Delta t}$), in which $\Delta x$ represents the motion of the pixel in the horizontal direction in the image, $\Delta y$ represents the motion of the pixel in the vertical direction in the image, and $\Delta t$ represents the time difference between the time point t and the time point t-1.

For example, for a pixel in an image that depicts a car that travels on the road, the optical flow prediction 165 at the pixel is a predicted motion vector that characterizes the motion of the pixel between the first image and the second image captured by the camera sensors on the vehicle 122. As another example, for a pixel in an image that depicts a pedestrian that walks across the road, the optical flow prediction 165 at the pixel is a predicted motion vector that characterized the motion of the pixel between the first image and the second image captured by the camera sensors on the vehicle 122.

The on-board machine learning subsystem 134 can provide the optical flow predictions 165 to a planning subsystem 136, a user interface subsystem 138, or both.

When a planning subsystem 136 receives the optical flow predictions 165, the planning subsystem 136 can use the optical flow predictions 165 to make fully-autonomous or semi-autonomous driving decisions, e.g., determining whether one or more objects in the scene is in motion or stationary. For example, the planning subsystem 136 can generate a fully-autonomous plan to slow down if the optical flow prediction of a nearby pedestrian indicates that the pedestrian is getting close to the autonomous vehicle. As another example, the planning subsystem 136 can generate a semi-autonomous recommendation for a human driver to apply the brakes if the optical flow prediction indicates that a nearby car is about to move in front of the vehicle 122.

A user interface subsystem 138 can receive the optical flow predictions 165 and can generate a user interface presentation that indicates the motion of nearby objects. For example, the user interface subsystem 138 can generate a user interface presentation having image or video data containing a representation of the motion of a nearby object, e.g., a vehicle, a pedestrian, a cyclist, and so on. An on-board display device can then display the user interface presentation for passengers of the vehicle 122.

The on-board machine learning subsystem 134 can also use the input data 155 to generate training data 123. The on-board system 120 can provide the training data 123 to the training system 110 in offline batches or in an online fashion, e.g., continually whenever it is generated.

The training system 110 is typically hosted within a data center 112, which can be a distributed computing system having hundreds or thousands of computers in one or more locations.

The training system 110 includes a training machine learning subsystem 114 that can implement the operations of a machine learning model that is designed to perform optical flow predictions from input data. The training machine learning subsystem 114 includes a plurality of computing devices having software or hardware modules that implement the respective operations of a machine learning model.

The training machine learning model generally has the same model architecture as the on-board machine learning model. However, the training system 110 need not use the same hardware to compute the operations of each layer. In other words, the training system 110 can use CPUs only, highly parallelized hardware, or some combination of these.

The training machine learning subsystem 114 can compute the operations of the machine learning model using current parameter values 115 stored in a collection of model parameter values 170. Although illustrated as being logically separated, the model parameter values 170 and the software or hardware modules performing the operations may actually be located on the same computing device or on the same memory device.

The training system 110 or the on-board system 120 can generate labeled training data 125 from the training data 123. The labeled training data 125 includes training examples 127, and each training example includes a training input and an optical flow label. Each training input includes a first image of a scene in an environment captured at a first time point, and a second image of the scene in the environment captured at a second, different time point. For example, a given training input can include a first camera image of a scene of the roadway at the first time point t-1, and a second camera image of the scene of the roadway at the second, later time point t.

An optical flow label for a training input can include the motion of pixels between the first and the second image, e.g., a velocity vector for each pixel in the first image that characterizes the motion of the pixel from the first image to the corresponding pixel in the second image between time point t-1 and time point t.

The training system 110 includes an optical flow label generation engine 118. The optical flow label generation engine 118 can generate labeled training data 125 by determining a respective proxy optical flow ground truth 126 for each of the training examples 127.

The proxy optical flow ground truth 126 is an approximate optical flow for the two camera images in the training input. The training system 110 or the on-board system 120 can generate the proxy optical flow ground truth 126 from three-dimensional (3D) velocity estimates for the lidar points in a lidar point cloud that measures the motion of the objects in the scene between the first time point and the second time point. Each point in a lidar point cloud corresponds to a reflection of laser pulses from objects in the environment.

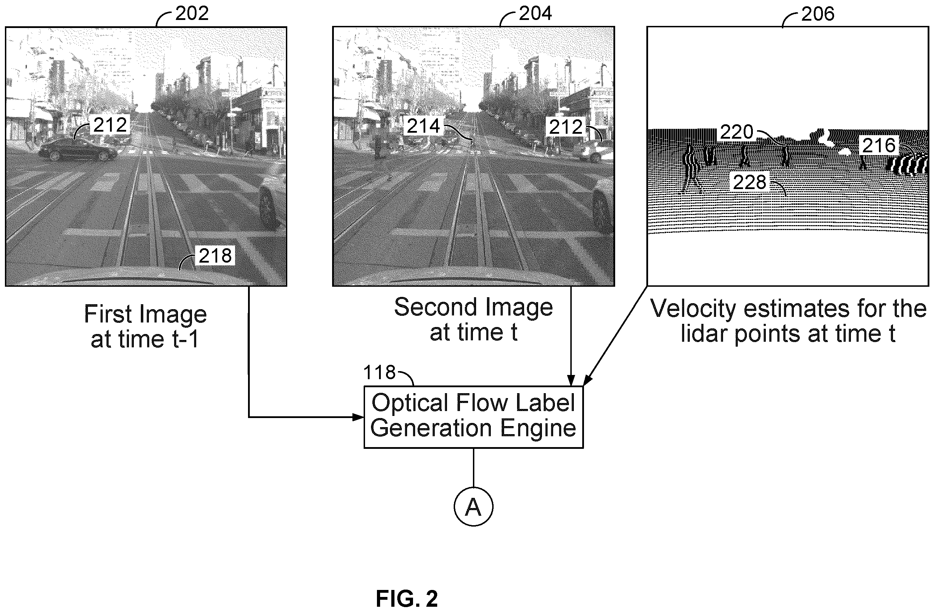

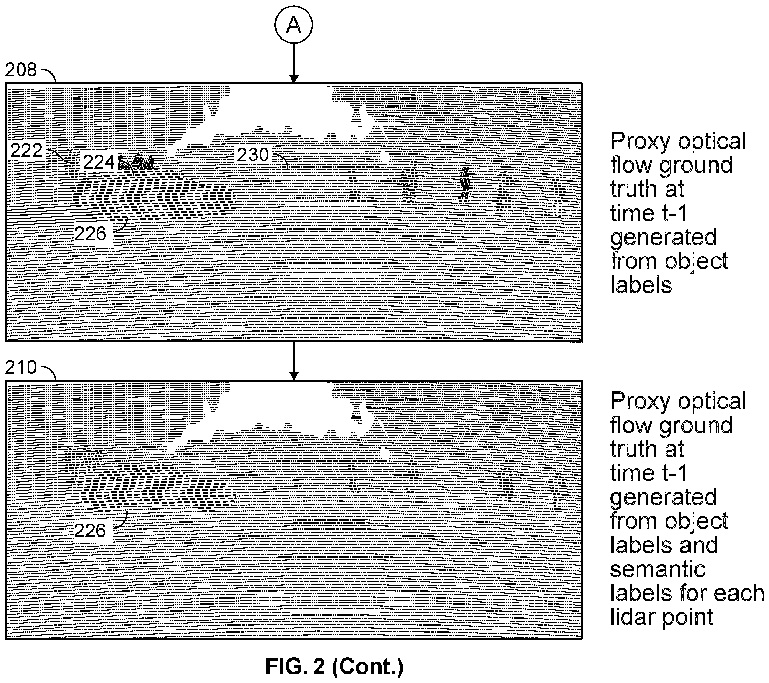

More details regarding generating the proxy optical flow ground truth from the lidar point cloud data are described below with reference to FIG. 2.

After generating the proxy optical flow ground truth label 126 for a training input, the system can associate the proxy optical flow ground truth label 126 with the training input, resulting in labeled training data 125.

The training machine learning subsystem 114 trains a machine learning model on the labeled training data 125 using a supervised training method or a semi-supervised training method. The training machine learning subsystem 114 can select a set of training examples 127 from the labeled training data 125. The training machine learning subsystem 114 can generate, for each training example 123, an optical flow prediction 135. The optical flow prediction 135 can be an estimated optical flow for the two images in the training example 123. A training engine 116 analyzes the optical flow predictions 135 and compares the optical flow predictions to the proxy optical flow ground truth labels in the training examples 127.

In some implementations, the training engine 116 can perform a semi-supervised training of the machine learning model. The training engine 116 can compute an unsupervised loss term that measures the similarities of corresponding pixels in the first and the second image. The unsupervised loss can be computed for training examples that do not have optical flow labels or proxy optical flow ground truth labels. The training engine 116 can perform the semi-supervised training by combining the unsupervised loss term with the loss term calculated by comparing the optical flow predictions to the proxy optical flow ground truth labels.

The training engine 116 then generates updated model parameter values 145 by using an appropriate updating technique based on the loss term, e.g., based on the differences between the optical flow predictions 135 and the proxy optical flow ground truth labels. For example, when training a neural network model, the training engine 116 can generate updated model parameter values by stochastic gradient descent with backpropagation. The training engine 116 can then update the collection of model parameter values 170 using the updated model parameter values 145.

After training is complete, the training system 110 can provide a final set of model parameter values 171 to the on-board system 120 for use in making fully autonomous or semi-autonomous driving decisions. The training system 110 can provide the final set of model parameter values 171 by a wired or wireless connection to the on-board system 120.

FIG. 2 illustrates an example of generating optical flow labels from lidar point cloud data. In this example, a vehicle 218 is travelling on the road, and the vehicle 218 can be an autonomous vehicle or semi-autonomous vehicle. The sensor subsystems 132 of the vehicle 218 captures sensor data that depicts a scene of the environment. The sensor subsystems 132 capture two camera images 202 and 204 that depict a scene in front of the vehicle 218, including a plurality of vehicles that are travelling on the road, e.g., the vehicle 212, and a plurality of pedestrians that are walking across the road, e.g., the pedestrian 214.

The image 202 is an image of the scene captured at a first time point t-1. The image 204 is an image of the scene captured at a second time point t. At the first time point, a car 212 is at a first location in the first image 202. At the second time point, the car 212 moved to a second location in the second image 204. In some implementations, the system can be configured to generate the proxy optical flow estimates for the pixels in a reference image. The example of FIG. 2 illustrates a process that generates the proxy optical flow estimates for the pixels in the image 202 at a first time point t-1. However, the reference image can be either the image captured at a first time point, or the image captured at a second, later time point.

The system obtains a plurality of lidar points captured at the second time point t by the lidar sensors in the sensor subsystems 132. In the image 206, the lidar points are projected to the respective corresponding pixels in the second image 204 captured at the second time point t. The lidar sensors can capture a vertical field of view that is in the middle of the image 206. The lidar sensors can capture a wide horizontal field of view, covering the entire scene from left to right. The lidar points in the image 206 are shown in different symbols (e.g., dashes of various length and thickness) and the different symbols represent different velocity estimates for the lidar points at the second time point.

For example, the point 220 represents the velocity estimate for the lidar point at the pedestrian 214. As another example, the point 216 represents the velocity estimate for the lidar point at the car 212.

In some implementations, the system can detect one or more objects in the scene, e.g., pedestrians or vehicles, and the system can obtain data specifying a respective 3D bounding box for each of the one or more detected objects and a per-point velocity estimate for each lidar point inside the 3D bounding box of the object. In some implementations, the system can obtain the per-point velocity estimate as an input from another system.

In some implementations, the system can assume the object moves rigidly by assuming a certain point can maintain its position relative to the object center between two frames of camera images or point clouds. For example, a car can move rigidly in the environment and a point on the surface of the car can maintain the same position relative to the center of the car between two frames of camera images. This assumption can simplify the calculation of the correspondence between two pixels in two frames of camera images, or two lidar points in two frames of point clouds.

The image 208 depicts a proxy optical flow ground truth for a portion of the first image 202 captured at the first time point. The system generates the proxy optical flow ground truth depicted in image 208 based on the velocity estimates for the lidar points captured at the second time point. For each lidar point of the plurality of lidar points, based on the 3D velocity estimate and the 3D location of the lidar point at the second time, the system can calculate the 3D location of the corresponding point at the first time. The system can project the 3D location of the lidar point at the first time point to a first pixel in the first image captured at the first time point. The system can project the 3D location of the lidar point at the second time point to a second pixel in the second image captured at the second time point. The system can calculate a proxy optical flow ground truth for the first pixel in the first image by calculating the motion from the first pixel to the second pixel.

For example, the system obtains a velocity estimate v for the 3D lidar point 216 of the car in the second image at the second time point t. The system can compute the corresponding 3D point 224 in the 3D space at the first time point t-1 based on the location of the 3D lidar point 216 and the velocity estimate v. For example, the system can determine the 3D point x' (the 3D point 224) at the first time point t-1, e.g., $x'=x+v*\Delta t$, where $\Delta t$ is the time between the first time point t-1, the second time point t, and x is the 3D lidar point 216. The system can project the 3D lidar point 216 captured at the second time point to a corresponding pixel in the second image 204. The system can project the 3D point 224 to a corresponding pixel in the first image 208. The system can compute the proxy optical flow ground truth for the pixel that corresponds to the lidar point 224 by calculating the motion of the pixel from 224 to 216. As shown in the image 208, the proxy optical flow ground truth for the pixels on the car, e.g., the pixel corresponding to the lidar point 224, is depicted by a first type of symbol (red color).

As another example, the system obtains the velocity estimate for the 3D lidar point 220 of the pedestrian in the second image at the second time point t. The system can compute the corresponding 3D point 222 at the first time point t-1 based on the location of the 3D lidar point and the velocity estimate of the pedestrian. The system can project the 3D lidar point 220 captured at the second time point to a corresponding pixel in the second image 204 captured at time t. The system can project the 3D point 222 to a corresponding pixel in the first image 208 at time t-1. The system can compute the proxy optical flow ground truth for the pixel that corresponds to the lidar point 222 by calculating the motion of the pixel from 222 to 220. As shown in the image 208, the proxy optical flow ground truth for the pixel that corresponds to the lidar point 224 in the first image is depicted by a second type of symbol (blue color).

In some implementations, one or more lidar points in the proxy optical flow may not have a corresponding pixel in one of the images. For example, a lidar point in the proxy optical flow can have a corresponding pixel in the first image at time t-1, but may not have a corresponding pixel in the second image at time t, e.g., when the corresponding location in the second image is outside of the boundary of the second image. The system can compute the proxy optical flow ground truth for the pixel in the first image that corresponds to the lidar point using the motion of the pixel. For example, the motion of the pixel in the first image can be v*$\Delta t$, where v is the velocity vector of the lidar point and $\Delta t$ is the time between the first time point t-1 and the second time point t.

In some implementations, a particular lidar point in the proxy optical flow may not correspond to an object with a 3D bounding box that has been detected by the system in the reference image, e.g., the camera image in the first time point at t-1. For example, the particular lidar point could be in the first frame of a sequence of frames, or the particular lidar point could be in a zone where object labels are not available. Therefore, the system may not obtain a per-point velocity vector that corresponds to the particular lidar point and the system cannot generate a proxy optical flow ground truth for the particular lidar point. The system can determine that the particular lidar point can be discarded or can be labeled as "invalid".

The lidar point that is in the 3D bounding box of an object may not correspond to a pixel of the object in the image 204. Therefore, the proxy optical flow ground truth may depict a ground near the object as in motion. For example, in the proxy optical flow ground truth depicted in image 208, the lidar point 226 that corresponds to ground near the vehicle has the same velocity vector as the lidar point 224 on the car because the lidar point 226 is inside the 3D bounding box of the car.

In some implementations, the system can generate a more accurate proxy ground truth depicted in the image 210 using semantic labels for the lidar points. The system can obtain a semantic label that identifies an object type of the object that is measured by the lidar point, e.g., a semantic label for the lidar point in the point cloud. The semantic label can be obtained from labels annotated by a human labeler, or can be generated by a machine learning model, or can be generated from a combination of both.

For example, the system can obtain a semantic label for the 3D bounding box for the car 212 that indicates the 3D bounding box corresponds to an object that has a class label as "car". The system can obtain a semantic label for each lidar point in the 3D bounding box. For example, the system can obtain a semantic label for each lidar point in the 3D bounding box that indicates a class label the lidar point, e.g., "car", "ground", "pedestrian", and so on. For example, the lidar point that corresponds to the pixel 224 can have a semantic label as "car", and the lidar point that corresponds to the pixel 226 can have a semantic label as "ground".

The system can determine the velocity vector for the lidar point based on comparing the semantic label for the 3D bounding box and the semantic label for the lidar point. For each lidar point in the 3D bounding box, the system can set the respective velocity estimate for the lidar point equal to the respective velocity estimate for a lidar point corresponding to the object only when the semantic label for the lidar point matches the semantic label for the 3D bounding box. Therefore, the system can correctly estimate the velocity vector for a lidar point on the road to be the same as the velocity vector of the background even when the lidar point is within a 3D bounding box of a moving object.

For example, the system can determine that the semantic label for the lidar point 224 matches the semantic label for the 3D bounding box because both labels indicate the "car" class. Therefore, the system can set the velocity estimate for the lidar point 224 equal to the velocity estimate for a lidar point corresponding to the car.

As another example, the system can determine that the semantic label for the lidar point 226, e.g., a "ground" class, does not match the semantic label for the 3D bounding box, e.g., a "car" class. Therefore, the system will not set the velocity estimate for the lidar point 226 equal to the velocity estimate for a lidar point on the car. The system can determine that the velocity estimate for the lidar point 226 is similar to the velocity estimate for the other lidar points on the static background, e.g., the velocity estimate for the ground of the road.

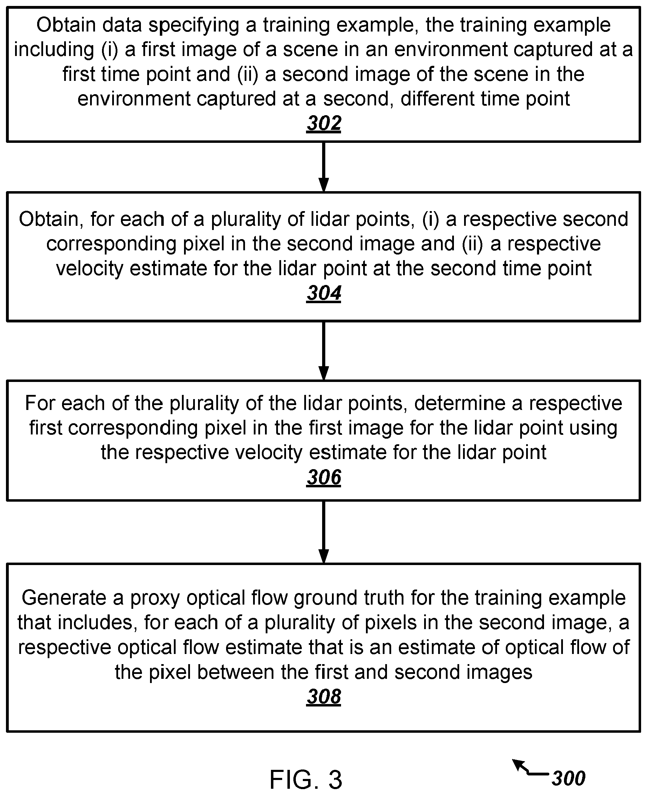

FIG. 3 is a flow chart of an example process 300 for generating a proxy optical flow ground truth based on a lidar point cloud. The process will be described as being performed by a system of one or more computers in one or more locations, appropriately programmed in accordance with this specification. For example, the system can be an on-board system located on-board a vehicle, e.g., the on-board system 120 of FIG. 1.

The system obtains data specifying a training example (302). The training example includes a first image of a scene in an environment captured at a first time point and a second image of the scene in the environment captured at a second, different time point. For example, the system can obtain a first image captured by the camera sensor at a first time t-1. The system can obtain a second image captured by the camera sensor at a second later time t. The first image and the second image can be consecutive frames of camera images, e.g., the time interval between the first time t-1 and the second time t can be 0.05 second.

The system obtains, for each of a plurality of lidar points, (i) a respective second corresponding pixel in the second image and (ii) a respective velocity estimate for the lidar point at the second time point (304). The system can obtain a lidar point cloud from sensor subsystems. The lidar point cloud includes a plurality of points that characterize distances from the lidar sensors to the objects in the scene of the environment.

The system can obtain a respective second corresponding pixel in the second image for each lidar point in the lidar point cloud based on a camera model of the camera sensor, such as the rolling shutter of the camera, the location of the one or more camera sensors, the location of the one or more lidar sensors, and the calibration data of one or more camera sensors and the one or more lidar sensors.

In some implementations, the system can obtain, for each of one or more detected objects, data specifying a respective three dimensional (3D) bounding box. The system can determine, for each lidar point in the 3D bounding box, the respective velocity estimate for the lidar point. In some implementations, the system can obtain the per-point velocity estimate as an input from another system.

In some implementations, for each detected object, the system can obtain two 3D bounding boxes of the object in subsequent frames, e.g., a first 3D bounding box of the object in the first image and a second 3D bounding box of the same object in the second image. Assuming the object moves rigidly, the system can calculate the relative transformation between the two 3D bounding boxes. For each point in the 3D bounding box, the system can compute a transformation that can characterize the point's change between the two subsequent frames, including translations and rotations. For example, the system can compute translations in one or more of x, y, and z directions, and the system can compute rotations that include one or more of yaw, roll, pitch, and so on. The velocity estimate of the point is the transformation of the point divided by the time duration between the frames. The per-point velocity estimate can include varying per point velocity based on angular velocity. For example, the points near the end of a turning car can move faster than the points near the middle of the car.

In some implementations, the system can obtain a semantic label for the 3D bounding box and can obtain a semantic label for each lidar point in the 3D bounding box. For each lidar point in the 3D bounding box, the system can set the respective velocity estimate for the lidar point equal to the per-point velocity estimate for the lidar point only when the semantic label for the lidar point matches the semantic label for the 3D bounding box.

For example, the system can obtain a classification label that indicates the class that the object of lidar point belongs to. For each of the plurality of lidar points, the system can determine that the lidar point is a static background point if the classification label for the lidar point indicates that the lidar point does not belong to a foreground object, e.g., a pedestrian, a car, a cyclist, and so on. In response, the system may not set the respective velocity estimate for the lidar point equal to the per-point velocity estimate for the lidar point generated from two 3D bounding boxes of the object in subsequent frames. For each of the plurality of lidar points, the system can determine that the lidar point belongs to a detected object if the classification label for the lidar point matches the classification label for the detected object. In response, the system can set the respective velocity estimate for the lidar point equal to the per-point velocity estimate for the lidar point generated from two 3D bounding boxes of the object in subsequent frames.

For each of the plurality of the lidar points, the system determines a respective first corresponding pixel in the first image for the lidar point using the respective velocity estimate for the lidar point (306). The system can calculate a 3D point at the first time point t-1 that corresponds to the lidar point at the second time point t based on the location of the lidar point at the second point t and the velocity estimate for the lidar point. The system can determine the respective first corresponding pixel in the first image by projecting the calculated 3D point at the first time point t-1 to the first image captured at the first time point t-1.

The system generates a proxy optical flow ground truth for the training example (308). The proxy optical flow ground truth includes, for each of a plurality of pixels in the second image, a respective optical flow estimate that is an estimate of the optical flow of the corresponding pixels between the first and second images. For each of the lidar points, the system determines an optical flow between the respective second corresponding pixel for the lidar point and the respective first corresponding pixel for the lidar point.

In some implementations, the system can obtain data specifying that one or more of the lidar points correspond to static background, e.g., the road in the scene. The system can generate, for each lidar point that corresponds to the static background, a respective optical flow estimate based on that the static background is static.

In some implementations, the system can detect the objects in the scene using a trained machine learning model that can take a camera image as input and can generate data specifying detected objects in the scene, e.g., cars, pedestrians, cyclists, trees, buildings, road signs, and so on. The system can determine that the rest of the image where objects are not detected corresponds to the static background, e.g., road, sky, and so on.

In some implementations, the system can determine the static background regions in the scene using a trained machine learning model that can take a camera image as input and can generate data specifying detected objects and background regions in the scene, e.g., cars, pedestrians, a region for the sky, a region for the road, and so on. The system can determine the lidar points that correspond to the static background based on the data specifying the background regions in the scene.

For example, referring to FIG. 2, the system can obtain data specifying that a pixel in image 206 corresponding to the lidar point 228 does not belong to a detect foreground object. The system can determine that the lidar point 228 corresponds to a region of the static background.

The system can generate an optical flow estimate for the static background based on a lidar point cloud. The system can project the lidar point of the static ground measured at the second time point to a first corresponding pixel in the first image captured at the first time point, and can project the lidar point to a second corresponding pixel in the second image captured at the second time point. The system can determine the optical flow estimate for the static ground by subtracting a position of the first corresponding pixel from a position of the second corresponding pixel.

The system can then assign the optical flow estimate to the lidar points that correspond to the static background. For example, the system can assign the optical flow estimate to the lidar point 230 that corresponds to a portion of the ground of the road.

In some implementations, the system can train a machine learning model on the training examples and the corresponding proxy optical flow ground truth labels for the training examples. The machine learning model can be trained to receive as input two images and to generate as output an estimate of an optical flow between the two images.

In some implementations, the system can train the machine learning model on an objective function that includes a first term that measures an error between a predicted optical flow generated by the machine learning model and the proxy optical flow ground truth for the training example. For example, the machine learning model can include a Flownet neural network model (Dosovitskiy, Alexey, et al. "Flownet: Learning optical flow with convolutional networks. " Proceedings of the IEEE international conference on computer vision. 2015).

In some implementations, data augmentation can be applied to the training input, i.e., the pair of images captured at the first and second time points. Examples of data augmentation include cropping the image, e.g., cropping near the boundary of the image, random cropping, changing the brightness of one of the images, and so on.

In some implementations, the system can train the machine learning model using a semi-supervised training process. For example, the paper of the UFlow neural network model (Jonschkowski, Rico, et al. "What matters in unsupervised optical flow." arXiv preprint arXiv:2006.04902 1.2 (2020): 3) describes an unsupervised training technique that uses an objective function that includes a loss term that measures an unsupervised loss, e.g., a loss that measures photometric losses such as the relative ordering of intensities in an image patch of corresponding pixels. The described unsupervised technique can be modified to incorporate a supervised loss term based on the proxy optical flow ground truth labels.

The system can train the machine learning model using a semi-supervised training process that includes two stages. In the first stage, the system can first pretrain the machine learning model on a large dataset using an unsupervised training process, and the proxy optical flow ground truth may not be available for some training examples in the large dataset. In the second stage, the system can train the machine learning model on a smaller dataset in which the proxy optical flow ground truth is available. The system can calculate an objective function that includes a first term that measures an error between a predicted optical flow generated by the machine learning model and the proxy optical flow ground truth for the training example. In some implementations, in the second stage, in addition to the first loss term, the system can compute the object function that further includes a second term that measures an unsupervised loss. The system can then generate updated model parameter values based on the value of the objective function by using an appropriate updating technique, e.g., stochastic gradient descent with backpropagation.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, off-the-shelf or custom-made parallel processing subsystems, e.g., a GPU or another kind of special-purpose processing subsystem. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and pointing device, e.g., a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:

   obtaining data specifying a training example, the training example comprising (i) a first image of a scene in an environment captured at a first time point and (ii) a second image of the scene in the environment captured at a second, different time point;
   obtaining, for each of a plurality of lidar points, (i) a respective second corresponding pixel in the second image and (ii) a respective velocity estimate for the lidar point at the second time point;
   for each of the plurality of the lidar points, determining a respective first corresponding pixel in the first image for the lidar point using the respective velocity estimate for the lidar point; and
   generating a proxy optical flow ground truth for the training example that includes, for each of a plurality of pixels in the second image, a respective optical flow estimate that is an estimate of optical flow of the pixel between the first and second images, comprising:
   for each of the lidar points, determining an optical flow between (i) the respective second corresponding pixel for the lidar point and (ii) the respective first corresponding pixel for the lidar point.

2. The method of claim 1, wherein obtaining, for each of the plurality of the lidar points, the respective velocity estimate for the lidar point at the second time point comprises:

   obtaining, for each of one or more detected objects, data specifying a respective three dimensional (3D) bounding box; and
   determining, for each lidar point in the 3D bounding box, the respective velocity estimate for the lidar point.

3. The method of claim 2, wherein determining, for each lidar point in the 3D bounding box, the respective velocity estimate for the lidar point comprises:

   obtaining a semantic label for the 3D bounding box;
   obtaining a semantic label for each lidar point in the 3D bounding box; and

for each lidar point in the 3D bounding box, setting the respective velocity estimate for the lidar point equal to a per-point velocity estimate for the lidar point only when the semantic label for the lidar point matches the semantic label for the 3D bounding box.

4. The method of any one of the preceding claims, further comprising:

obtaining data specifying that one or more of the lidar points correspond to static background; and

generating, for each lidar point that corresponds to the static background, a respective optical flow estimate based on that the static background is static.

5. The method of any one of the preceding claims, further comprising:
training a machine learning model on the training example and the proxy optical flow ground truth, wherein the machine learning model receives as input two images and generates as output an estimate of an optical flow between the two images.

6. The method of claim 5, wherein training the machine learning model comprises:
training the machine learning model on an objective function that includes a first term that measures an error between a predicted optical flow generated by the machine learning model and the proxy optical flow ground truth for the training example.

7. The method of claim 6, wherein training the machine learning model comprises training the machine learning model using a semi-supervised training process, and wherein the objective function further comprises a second term that measures an unsupervised loss.

8. A system comprising one or more computers and one or more storage devices storing instructions that when executed by the one or more computers cause the one or more computers to perform operations comprising:

obtaining data specifying a training example, the training example comprising (i) a first image of a scene in an environment captured at a first time point and (ii) a second image of the scene in the environment captured at a second, different time point;
obtaining, for each of a plurality of lidar points, (i) a respective second corresponding pixel in the second image and (ii) a respective velocity estimate for the lidar point at the second time point;

for each of the plurality of the lidar points, determining a respective first corresponding pixel in the first image for the lidar point using the respective velocity estimate for the lidar point; and
generating a proxy optical flow ground truth for the training example that includes, for each of a plurality of pixels in the second image, a respective optical flow estimate that is an estimate of optical flow of the pixel between the first and second images, comprising:
for each of the lidar points, determining an optical flow between (i) the respective second corresponding pixel for the lidar point and (ii) the respective first corresponding pixel for the lidar point.

9. The system of claim 8, wherein obtaining, for each of the plurality of the lidar points, the respective velocity estimate for the lidar point at the second time point comprises:

obtaining, for each of one or more detected objects, data specifying a respective three dimensional (3D) bounding box; and
determining, for each lidar point in the 3D bounding box, the respective velocity estimate for the lidar point.

10. The system of claim 9, wherein determining, for each lidar point in the 3D bounding box, the respective velocity estimate for the lidar point comprises:

obtaining a semantic label for the 3D bounding box;
obtaining a semantic label for each lidar point in the 3D bounding box; and
for each lidar point in the 3D bounding box, setting the respective velocity estimate for the lidar point equal to a per-point velocity estimate for the lidar point only when the semantic label for the lidar point matches the semantic label for the 3D bounding box.

11. The system of any one of claims 8 to 10, the operations further comprise:

obtaining data specifying that one or more of the lidar points correspond to static background; and
generating, for each lidar point that corresponds to the static background, a respective optical flow estimate based on that the static background is static.

12. The system of any one of claims 8 to 11, the operations further comprise:
training a machine learning model on the training example and the proxy optical flow ground truth, wherein the machine learning model receives as input two images and generates as output an estimate of an optical flow between the two images.

13. The system of claim 12, wherein training the machine learning model comprises:
training the machine learning model on an objective function that includes a first term that measures an error between a predicted optical flow generated by the machine learning model and the proxy optical flow ground truth for the training example.

14. The system of claim 13, wherein training the machine learning model comprises training the machine learning model using a semi-supervised training process, and wherein the objective function further comprises a second term that measures an unsupervised loss.

15. One or more non-transitory computer-readable storage media storing instructions that when executed by one or more computers cause the one or more computers to perform the method of any one of claims 1 to 7.

FIG. 1

First Image at time t-1

Second Image at time t

Velocity estimates for the lidar points at time t

Optical Flow Label Generation Engine

**FIG. 2**

EP 4 123 582 A1

208

222
224
230
226

Proxy optical flow ground truth at time t-1 generated from object labels

210

226

Proxy optical flow ground truth at time t-1 generated from object labels and semantic labels for each lidar point

**FIG. 2 (Cont.)**

EP 4 123 582 A1

Obtain data specifying a training example, the training example including (i) a first image of a scene in an environment captured at a first time point and (ii) a second image of the scene in the environment captured at a second, different time point
*302*

Obtain, for each of a plurality of lidar points, (i) a respective second corresponding pixel in the second image and (ii) a respective velocity estimate for the lidar point at the second time point
*304*

For each of the plurality of the lidar points, determine a respective first corresponding pixel in the first image for the lidar point using the respective velocity estimate for the lidar point
*306*

Generate a proxy optical flow ground truth for the training example that includes, for each of a plurality of pixels in the second image, a respective optical flow estimate that is an estimate of optical flow of the pixel between the first and second images
*308*

FIG. 3 *300*

Europäisches
Patentamt

European
Patent Office

Office européen
des brevets

# EUROPEAN SEARCH REPORT

Application Number

EP 22 18 6263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. GEIGER ET AL: "Are we ready for autonomous driving? The KITTI vision benchmark suite", 2012 IEEE CONFERENCE ON COMPUTER VISION AND PATTERN RECOGNITION, 1 June 2012 (2012-06-01), pages 3354-3361, XP055518414, DOI: 10.1109/CVPR.2012.6248074 ISBN: 978-1-4673-1227-1 | 1,4-8, 11-15 | INV. G06T7/20 |
| A | * page 2 - page 5 * | 2,3,9,10 | |
| Y | VICTOR VAQUERO ET AL: "Deep Lidar CNN to Understand the Dynamics of Moving Vehicles", ARXIV.ORG, CORNELL UNIVERSITY LIBRARY, 201 OLIN LIBRARY CORNELL UNIVERSITY ITHACA, NY 14853, 28 August 2018 (2018-08-28), XP081185154, * page 3 - page 4 * | 1,4-8, 11-15 | |
| A | SONG YAFEI ET AL: "2D LiDAR Map Prediction via Estimating Motion Flow with GRU", 2019 INTERNATIONAL CONFERENCE ON ROBOTICS AND AUTOMATION (ICRA), IEEE, 20 May 2019 (2019-05-20), pages 6617-6623, XP033593454, DOI: 10.1109/ICRA.2019.8793490 [retrieved on 2019-08-09] * page 6618 * | 1-15 | |

TECHNICAL FIELDS
SEARCHED (IPC)

G06T

The present search report has been drawn up for all claims

| Place of search | Date of completion of the search | Examiner |
|---|---|---|
| Munich | 10 December 2022 | Celik, Hasan |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DOSOVITSKIY, ALEXEY et al.** Flownet: Learning optical flow with convolutional networks. *Proceedings of the IEEE international conference on computer vision,* 2015

- **JONSCHKOWSKI, RICO et al.** What matters in unsupervised optical flow. *arXiv:2006.04902 1.2,* 2020, 3